# FASCICULE DE BREVET EUROPEEN

(11) **EP 1 102 720 B1**
(45) Date de publication et mention de la délivrance du brevet: **26.03.2003**
(21) Numéro de dépôt: 99929490.3
(22) Date de dépôt: 15.07.1999
(51) Int. Cl.: C01C 1/10, C07D 201/16

(54) **PROCEDE DE DISTILLATION D'AMMONIAC**
VERFAHREN ZUR DESTILLATION VON AMMONIAK
METHOD FOR DISTILLING AMMONIA

(30) Priorité: 22.07.1998 FR 9809530
(43) Date de publication de la demande: 30.05.2001
(73) Titulaire: Rhodia Polyamide Intermediates, 69192 Saint-Fons (FR)
(72) Inventeur: BOCQUENET, Gérald, F-69360 Communay (FR); HOUSSIER, Patrick, F-69310 Pierre-Benite (FR)
(74) Mandataire: Esson, Jean-Pierre
(86) Numéro de dépôt international: FR9901731
(87) Numéro de publication internationale: WO00005173

(56) Documents cités:
- DE-A- 19 548 289
- FR-A- 2 526 005
- FR-A- 2 755 132
- US-A- 3 054 726
- US-A- 3 595 615

## Description

La présente invention concerne un procédé perfectionné de distillation d'ammoniac à partir d'un mélange, plus particulièrement d'un mélange issu de la réaction entre un aminonitrile et l'eau (réaction aussi appelée hydrolyse cyclisante).

Lors de l'hydrolyse cyclisante d'un aminonitrile pour former un lactame, il y a également formation d'une molécule d'ammoniac par molécule de lactame.

En fin de réaction, le mélange réactionnel contient donc au moins le lactame produit, l'eau en excès et l'ammoniac.

Il peut contenir des quantités moindres d'aminonitrile n'ayant pas réagi ou d'éventuels sous-produits de la réaction.

Il peut également comporter un solvant éventuellement mis en oeuvre dans la réaction d'hydrolyse cyclisante.

Pour la description des différents procédés de préparation de lactame par hydrolyse cyclisante d'un aminonitrile, on peut se référer par exemple au brevet EP-A-0 659 741 ou à la demande internationale de brevet WO-A-96/22974 ou encore aux demandes internationales de brevets WO-A-95/14664 et 95/14665.

L'hydrolyse cyclisante peut être réalisée en phase vapeur ou en phase liquide. Le procédé de l'invention peut s'appliquer aux mélanges issus de l'un ou l'autre de ces modes de préparation.

Parmi les solutions issues de l'hydrolyse cyclisante d'aminonitrile en lactame, celles qui correspondent à la préparation du caprolactame à partir d'amino-6 capronitrile et d'eau, sont les plus importantes au plan industriel, car ledit caprolactame conduit par polymérisation en polyamide 6.

Le procédé de l'invention se rapportera donc plus précisément à la distillation d'ammoniac à partir de solutions aqueuses de caprolactame, mais elle peut être transposée aux solutions aqueuses d'autres lactames.

Lorsque l'on veut séparer l'ammoniac dissous dans une solution aqueuse de caprolactame, il faut éviter au maximum la dégradation de caprolactame. Cela signifie que lors de la distillation, la température en pied sera maintenue de préférence à une valeur inférieure ou égale à 160°C et plus préférentiellement inférieure ou égale à 145°C. Cette contrainte que l'on s'impose implique de limiter la pression absolue à une valeur inférieure ou égale à 5 bar et préférentiellement inférieure ou égale à 3,5 bar.

En conséquence de ce qui précède, la température de sortie de l'ammoniac en tête de colonne est, selon la limite de pression absolue précédente adoptée, inférieure ou égale à + 5°C et de préférence inférieure ou égale à - 6°C.

Industriellement, une condensation efficace de l'ammoniac en tête de colonne nécessite un groupe frigorifique de puissance considérable. Par exemple, il faudra un groupe frigorifique de 300 kW pour distiller environ 1200 kilogrammes/heure d'ammoniac.

La présente invention a pour objet un procédé de séparation par distillation de l'ammoniac contenu dans une solution aqueuse de caprolactame, en maintenant la température de ladite solution en pied de colonne à une valeur inférieure ou égale à 160°C et de préférence inférieure ou égale à 145°C, dans des conditions permettant de réduire la consommation d'énergie nécessaire, notamment d'électricité, pour un même débit d'ammoniac distillé.

Plus précisément l'invention consiste en un procédé de distillation de l'ammoniac contenu dans une solution aqueuse de caprolactame, caractérisé en ce que l'on distille à l'aide d'une colonne, avec une température en pied inférieure ou égale à 160°C et sous une pression absolue inférieure ou égale à 5 bar, l'ammoniac distillé en tête de colonne étant comprimé sous une pression supérieure ou égale à 10 bar, puis condensé à une température de 25°C à 60°C.

De préférence, la température en pied est inférieure ou égale à 145°C et la pression absolue est inférieure ou égale à 3,5 bar.

L'ammoniac distillé en tête de colonne est de préférence comprimé sous une pression comprise entre 10 bar et 25 bar.

Après condensation, l'ammoniac liquide obtenu sous une pression de 10 à 25 bar est détendu à la pression de la colonne dans un séparateur liquide/vapeur. Lors de la détente, l'ammoniac se vaporise partiellement, se refroidit et la vapeur générée est envoyée en tête de la colonne à distiller, puis est recomprimée par le compresseur de tête de colonne. Le liquide récupéré dans le séparateur liquide/vapeur est pompé, puis est renvoyé partiellement en tête de colonne comme reflux, l'autre partie constituant l'ammoniac pur récupéré, est envoyée comme produit valorisable.

Cette solution ne nécessite pas la présence d'un groupe frigorifique externe pour la condensation de l'ammoniac distillé. L'énergie nécessaire pour la compression est de l'ordre de 70 % environ de l'énergie qui serait consommée par ledit groupe frigorifique.

De plus, l'investissement nécessaire au procédé se trouve réduit par la simplification du schéma de circulation des flux.

La solution aqueuse de caprolactame contenant l'ammoniac a une concentration en caprolactame et une concentration en ammoniac qui varient largement selon les conditions de préparation du caprolactame, notamment le rapport molaire initial eau/aminonitrile, la présence ou non d'un solvant organique. La concentration en caprolactame peut varier en général de 5 % à 80 % en poids par rapport au poids total de la solution et de préférence de 20 % à 75 %. La concentration en ammoniac peut varier en général de 0,85 % à 15 % en poids par poids total de solution et de préférence de 3,5 % à 14 %.

L'ammoniac à distiller présentant des caractéristiques physiques très différentes des autres composés de la solution aqueuse le contenant, il n'est pas nécessaire d'utiliser une colonne présentant un très grand nombre de plateaux théoriques.

Des colonnes à garnissage qui présentent environ dix plateaux théoriques conviennent très bien pour la mise en oeuvre du procédé de l'invention. Cependant cette valeur indicative ne constitue pas une limite impérative dans le cadre de l'invention. Des colonnes plus performantes n'ont comme inconvénient qu'un coût d'investissement plus élevé, tandis que des colonnes moins efficaces peuvent néanmoins être utilisées de manière non préférentielle.

Le garnissage utilisé pourra être du type garnissage vrac ou garnissage ordonné tel que proposé par les différents constructeurs et dimensionné selon les règles de l'art.

Il est également possible d'utiliser des colonnes à plateaux, bien que cela soit moins intéressant du point de vue des pertes de charges.

Le compresseur des vapeurs de tête pourra, selon les applications et les capacités de traitement, être du type compresseur volumétrique comme par exemple un compresseur alternatif ou à vis ou du type centrifuge, sans que ces technologies soient exhaustives pour le procédé précité.

L'exemple qui suit illustre l'invention. Cet exemple ainsi que l'essai comparatif correspondent à une production de 8 t/h de caprolactame.

### EXEMPLE 1 : distillation avec compression des vapeurs de tête

Distillation d'un produit ayant la composition suivante :
- ammoniac : 9 % poids
- eau : 30 % poids
- caprolactame : 61 % poids
Les caractéristiques de la colonne de distillation sont les suivantes :
- nombre d'étages de distillation : 10
- taux de reflux : 0,30
- pression opératoire absolue en tête : 3,5 bar
- température de tête : 35°C
- température de pied : 145°C
- charge thermique du bouilleur : 1,1 Gcal/h
- pression absolue de refoulement du compresseur de tête : 14 bar
- puissance consommée du compresseur de tête : 160 kW
- charge thermique du condenseur au refoulement du compresseur : 0,7 Gcal/h

La solution de caprolactame qui a été obtenue après distillation de l'ammoniac a la composition suivante :
- ammoniac : 0,01 % poids
- eau : 33 % poids
- caprolactame : 67 % poids

### ESSAI COMPARATIF 1 : distillation classique avec groupe frigorifique en tête

Distillation d'un produit ayant la composition suivante :
- ammoniac : 9 % poids
- eau : 30 % poids
- caprolactame : 61 % poids
Les caractéristiques de la colonne de distillation sont les suivantes :
- nombre d'étages de distillation : 10
- taux de reflux : 0,35
- pression opératoire absolue en tête : 3,5 bar
- température de tête : -9°C
- température de pied : 145°C
- charge thermique du bouilleur : 1,1 Gcal/h
- charge thermique du condenseur : 0,5 Gcal/h
- puissance consommée du groupe frigorifique : 270 kW, avec une condensation à 35°C.

La solution de caprolactame qui a été obtenue après distillation de l'ammoniac a la composition suivante :
- ammoniac : 0,01 % poids
- eau : 33 % poids
- caprolactame : 67 % poids

Les performances des distillations dans l'exemple 1 et dans l'essai comparatif sont strictement identiques en termes d'efficacité de la séparation de l'ammoniac.

La consommation d'énergie pour atteindre ces résultats est nettement plus faible dans le procédé selon l'invention.

## Revendications

1. Procédé de séparation par distillation de l'ammoniac contenu dans une solution aqueuse de caprolactame, **caractérisé en ce que** l'on distille à l'aide d'une colonne, avec une température en pied inférieure ou égale à 160°C et sous une pression absolue inférieure ou égale à 5 bar, l'ammoniac distillé en tête de colonne étant comprimé sous une pression absolue supérieure ou égale à 10 bar, puis condensé à une température de 25°C à 60°C.

2. Procédé selon la revendication 1, **caractérisé en ce que** la température en pied est inférieure ou égale à 145°C et la pression absolue est inférieure ou égale à 3,5 bar.

3. Procédé selon l'une des revendications 1 ou 2, **caractérisé en ce que** l'ammoniac distillé en tête de colonne est comprimé sous une pression absolue comprise entre 10 bar et 25 bar.

4. Procédé selon l'une des revendications 1 à 3, **caractérisé en ce que** la pression de l'ammoniac distillé en tête de colonne est augmentée à l'aide d'un compresseur de type volumétrique ou de type centrifuge.

5. Procédé selon l'une des revendications 1 à 4, **caractérisé en ce que** la solution aqueuse mise en oeuvre contient de 5 % à 80 % en poids de caprolactame par rapport au poids total de ladite solution et de 0,85 % à 15 % en poids d'ammoniac par rapport au poids total de ladite solution.

6. Procédé selon l'une des revendications 1 à 5, **caractérisé en ce que** la solution aqueuse mise en oeuvre contient de 20 % à 75 % en poids de caprolactame par rapport au poids total de ladite solution et de 3,5 % à 14 % en poids d'ammoniac par rapport au poids total de ladite solution.

## Claims

1. Process for separating, by distillation, the ammonia contained in an aqueous caprolactam solution, **characterized in that** the distillation is carried out using a column with a bottom temperature less than or equal to 160°C and at an absolute pressure less than or equal to 5 bar, the ammonia distilled at the top of the column being compressed to an absolute pressure greater than or equal to 10 bar and then condensed at a temperature of 25°C to 60°C.

2. Process according to Claim 1, **characterized in that** the temperature at the bottom of the column is less than or equal to 145°C and the absolute pressure is less than or equal to 3.5 bar.

3. Process according to either of Claims 1 and 2, **characterized in that** the ammonia distilled at the top of the column is compressed to an absolute pressure of between 10 bar and 25 bar.

4. Process according to one of Claims 1 to 3, **characterized in that** the pressure of the ammonia distilled at the top of the column is increased by means of a compressor of the positive-displacement type or of the centrifugal type.

5. Process according to one of Claims 1 to 4, **characterized in that** the aqueous solution used contains from 5% to 80% by weight of caprolactam with respect to the total weight of the said solution and from 0.85% to 15% by weight of ammonia with respect to the total weight of the said solution.

6. Process according to one of Claims 1 to 5, **characterized in that** the aqueous solution used contains from 20% to 75% by weight of caprolactam with respect to the total weight of the said solution and from 3.5% to 14% by weight of ammonia with respect to the total weight of the said solution.

## Patentansprüche

1. Verfahren zur Abtrennung von Ammoniak durch Destillation, enthalten in einer wäßrigen Lösung von Caprolactam, **dadurch gekennzeichnet, daß** man mit Hilfe einer Kolonne bei einer Fußtemperatur von unter oder gleich 160 °C und unter einem absoluten Druck von unter oder gleich 5 bar destilliert, das am Kopf der Kolonne destillierte Ammoniak unter einem absoluten Druck von über oder gleich 10 bar komprimiert und anschließend bei einer Temperatur von 25 °C bis 60 °C kondensiert.

2. Verfahren nach Anspruch 1, **dadurch gekennzeichnet, daß** die Fußtemperatur unter oder gleich 145 °C und der absolute Druck unter oder gleich 3,5 bar betragen.

3. Verfahren nach einem der Ansprüche 1 oder 2, **dadurch gekennzeichnet, daß** das am Kopf der Kolonne destillierte Ammoniak unter einem absoluten Druck zwischen 10 und 25 bar komprimiert wird.

4. Verfahren nach einem der Ansprüche 1 bis 3, **dadurch gekennzeichnet, daß** der Druck des am Kopf der Kolonne destillierten Ammoniaks mit Hilfe eines Kompressors vom volumetrischen Typ oder Zentrifugen-Typ erhöht wird.

5. Verfahren nach einem der Ansprüche 1 bis 4, **dadurch gekennzeichnet, daß** die eingesetzte wäßrige Lösung 5 Gew.-% bis 80 Gew.-% Caprolactam, bezogen auf das Gesamtgewicht der genannten Lösung, und 0,85 Gew.-% bis 15 Gew.-% Ammoniak, bezogen auf das Gesamtgewicht der genannten Lösung, enthält.

6. Verfahren nach einem der Ansprüche 1 bis 5, **dadurch gekennzeichnet, daß** die eingesetzte wäßrige Lösung 20 Gew.-% bis 75 Gew.-% Caprolactam, bezogen auf das Gesamtgewicht der genannten Lösung, und 3,5 Gew.-% bis 14 Gew.-% Ammoniak, bezogen auf das Gesamtgewicht der genannten Lösung, enthält.
